# EUROPÄISCHE PATENTSCHRIFT

(11) **EP 2 314 529 B1**
(45) Veröffentlichungstag und Bekanntmachung des Hinweises auf die Patenterteilung: **29.05.2013**
(21) Anmeldenummer: 10175891.0
(22) Anmeldetag: 09.09.2010
(51) Int. Cl.: B65G 47/66

(54) **Transporteinheit mit Stauröllchenketten**
Transport unit with accumulation roll chain
Unité de transport dotée de chaînes à petits rouleaux de retenue

(30) Priorität: 21.10.2009 DE 102009044297
(43) Veröffentlichungstag der Anmeldung: 27.04.2011
(73) Patentinhaber: Krones AG, 93073 Neutraubling (DE)
(72) Erfinder: Kaes, Roland, 93098 Mintraching (DE)
(74) Vertreter: Reichert, Werner Franz

(56) Entgegenhaltungen:
- DE-U1- 9 212 012
- GB-A- 1 000 623
- US-A- 1 686 519
- US-A- 4 406 036
- US-A- 5 957 265

## Beschreibung

Die vorliegende Erfindung betrifft eine Transporteinheit mit Stauröllchenketten gemäß den Merkmalen des Oberbegriffes des Anspruchs 1.

Staurollen- Kettenförderer dienen zum Transport und Stauen von schweren, großen Objekten. Sie werden vielfältig eingesetzt, beispielsweise in der Autoindustrie zur Förderung von Autokarosserieteilen oder aber in der Getränke- und Verpackungsindustrie zum Transport und Stauen von Behältern, Gebinden oder Ähnlichem.

Staurollen- Kettenförderer sind insbesondere für den Transport von Gütern über gerade verlaufende Strecken geeignet. Sie können sowohl bei gewolltem als auch bei ungewolltem Stau des Fördergutes ohne dessen Beschädigung ihre laufende Bewegung aufrecht erhalten.

Aus DE 31 48 177 C2 ist ein Tragkettenförderer mit Staurollenförderketten bekannt, wobei die Kette Tragstücke aufweist, die als gebremste Staurollen ausgebildet sind. Die Staurollen sind auf den Bolzen der Kette und zwischen deren Laschen gelagert und ragen in Richtung des Transportguts zur Abstützung desselben über die Laschen hinaus. Die Kettenteilung ist so gewählt, dass die Staurollen für den Trenn- und Staueffekt frei drehbar sind. Das Fördertrum der Kette ist über Laufrollen auf einer zwischen den Umlenkrollen angeordneten Tragkonstruktion abgestützt. Die Laufrollen sind jeweils auf den beidseitig über die Laschen hinaus verlängerten Bolzen gelagert. In Richtung des Transportguts sind die Tragrollen mit an der Tragkonstruktion befestigten Fußleisten überdeckt. Zwischen den gegenüberliegenden Fußleisten verbleibt ein Spalt, der den Durchtritt der Staurollen ermöglicht.

Aus der Patentschrift US 3 857 478 ist eine Kettenförderbahn für schwere Container bekannt. Diese Kettenförderbahn besteht im Wesentlichen aus mindestens zwei Kettenförderern, die in Förderrichtung gesehen parallel nebeneinander und mit Abstand zueinander verlaufen sowie jeweils eine endlos umlaufende Kette aufweisen. Die Kette wird jeweils über am Anfang und am Ende der Kettenförderer angeordnete Umlenkräder geführt. In Förderrichtung gesehen, zwischen den Umlenkrädern eines Kettenförderers sowie in Förderrichtung verlaufend, ist jeweils eine Tragkonstruktion angeordnet, von der das Obertrum der Kette gestützt wird. Somit können auf dem Obertrum der Kette die Container transportiert werden.

Aus der DE 34 32 042 C2 ist ein Fördersystem mit zwei parallel zueinander und voneinander beabstandeten sowie in Förderrichtung verlaufenden Staurollenketten bekannt, die jeweils zwischen über an den Enden des Fördersystems angeordneten Umlenkrädern endlos umlaufen. Die Staurollenketten weisen zur Aufnahme des Stückgutes Tragstücke auf, die als Staurollen ausgebildet sind und in Richtung des Transportguts zur Abstützung desselben über die Ketten hinausragen. Die Staurollen sind auf den Bolzen der Ketten, über die die Laschen der Ketten untereinander verbunden werden, und zwischen diesen Laschen gelagert. Die Kettenteilung ist so gewählt, dass die Staurollen frei drehbar sind, um diese Staurollenkette für den sog. Trenn- und Staueffekt des Fördersystems einsetzen zu können, d.h. das Transportgut kann von außen über Anschläge angehalten werden, wobei die Staurollenkette weiterläuft und die Staurollen unter dem ruhenden Transportgut abrollen. Zum Wiederanfahren des Transportgutes und dessen Weitertransport sind die Staurollen leicht gebremst gelagert und können daher nach Lösen des Anschlages das Transportgut mitnehmen. Die Ketten sind jeweils über Laufrollen auf zwischen den Umlenkrädern angeordneten Tragelementen in Form von Schienen abgestützt. Die Laufrollen sind jeweils auf den Bolzen der Kette gelagert, die hierfür beidseitig über die Laschen hinaus verlängert sind.

In der Getränke- und Verpackungsindustrie werden Stauröllchenförderer beispielsweise zum Transport und Stauen von Gebinden eingesetzt. Eine Transporteinheit für Stauröllchenförderer setzt sich üblicherweise aus mindestens zwei Endlosförderern zusammen zwischen denen ein Übergangsbereich ausgebildet ist, wie beispielsweise in der amerikanischen Patentschrift US 5,957,265 A offenbart. In der Praxis hat sich gezeigt, dass der durch den Übergangsbereich gebildete Spalt zu erheblichen Störungen beim Transport der Artikel führt, wie bspw. ein Umkippen der Artikel oder gleichen. Daher offenbart die britische Patentschrift GB 1,000,623 A eine gattungsgemäβe Transporteinheit und insbesondere eine zwischen zwei als Stauröllchenkette ausgebildeten Endlosförderern angeordnete Übergangseinheit, die einen im Wesentlichen ebenen Transportweg bildet. Über eine Art von Riemenantrieb betriebene Rolle, die als ein separates Bauteil die Übergangseinheit bildet, werden somit die Artikel leichter von der Stauröllchenkette des ersten Endlosförderers auf die

Stauröllchenkette des zweiten Endlosförderers transportiert.

Zudem ist es im Stand der Technik der Getränke- und Verpackungsindustrie üblich, die Schnittstelle zwischen zwei Endlosförderern an ihren jeweiligen Rahmenelementen beispielsweise mittels einer Schraubverbindung zu verbinden.

Diese Schraubverbindung erschwert die Montage und Inbetriebnahme, da die Übergangsstelle, die bspw. auch als Laufrollenmodul mit vier Laufrollen ausgebildet ist, eingerichtet werden muss. Desweiteren muss die Geländerführung bzw. die Rahmenelemente getrennt bzw. vor Ort wieder verbunden werden. Hinzu kommt, dass durch einen langen Übergangsbereich, der Transport der Artikel gestört werden kann.

Aufgabe der Erfindung ist es, den Übergangsbereich zwischen Antriebselement und Umlenkelement so klein wie möglich zu gestalten, um einen reibungslosen und ungestörten Übergang der Artikel von dem ersten Endlosförderer auf den zweiten Endlosförderer zu ermöglichen.

Die obige Aufgabe wird durch eine Transporteinheit gelöst, die die Merkmale des Anspruchs 1 umfasst.

Die Erfindung betrifft eine Transporteinheit zum Transport und/oder zum Aufstauen von Artikeln, insbesondere von Flaschen oder Gebinden. Die Transporteinheit umfasst mindestens zwei über jeweils zwei Umlenkrollen geführte aneinandergrenzende Endlosförderer. Die Endlosförderer sind jeweils als Stauröllchenkette ausgebildet und in einem Rahmen gehaltert. Zwischen den Endlosförderern ist eine Übergangseinheit angeordnet, die eine Mehrzahl von Laufrollen umfasst. Die Laufrollen der Übergangseinheit sind so angeordnet, dass die Stauröllchenketten des ersten Endlosförderers, die Stauröllchenkette des zweiten Endlosförderers und die Übergangseinheit eine im Wesentlichen kontinuierliche Transportebene bilden. Dadurch wird der Übergang der Artikel von der Stauröllchenkette des ersten Endlosförderers auf die Stauröllchenkette des zweiten Endlosförderers erleichtert.

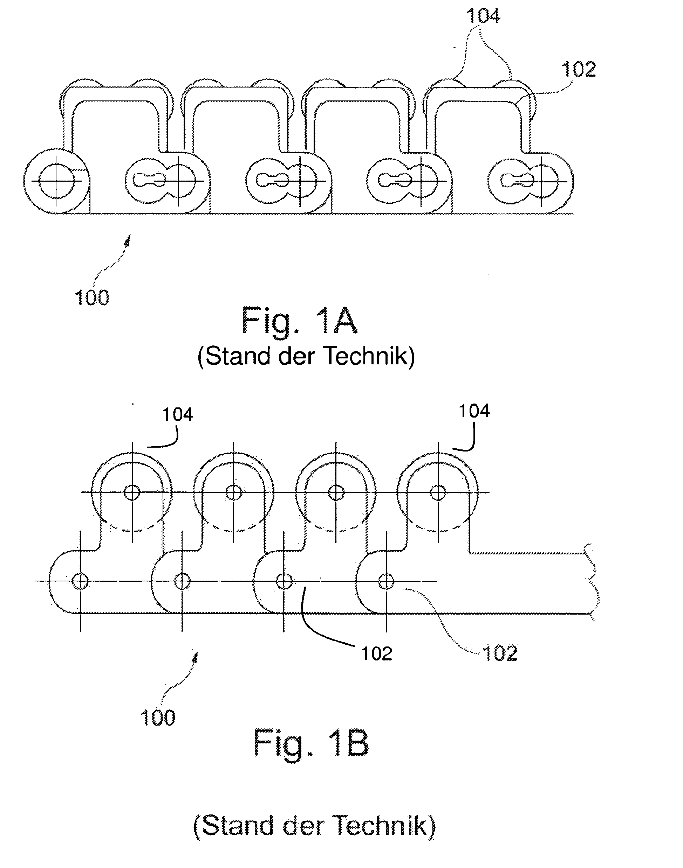

Erfindungsgemäß sind der erste und der zweite Endlosförderer jeweils in einen Rahmen eingebaut. Die Rahmen bzw. die Tragstruktur des in den Figuren 1 - 6 und 9 gezeichnenden Standes der Technik besteht aus zwei seitlichen Rahmenteilen und zwei Querrahmenteilen. Die Querrahmenteile der Rahmen des ersten Endlosförderers und des zweiten Endlosförderers sind miteinander verbunden, wobei zwischen den Endlosförderern eine Übergangseinheit angeordnet ist, die eine Mehrzahl von Laufrollen umfasst, so dass die Stauröllchenketten der beiden Endlosförderer und die Übergangseinheit einen im Wesentlichen ebenen Transportweg bilden. Der erste und/oder der zweite Endlosförderer sind derart in zueinander angeordnet sind, dass zwischen dem ersten Endlosförderer und dem zweiten Endlosförderer nur ein Querrahmenteil vorhanden ist.

Gemäß einer Ausführungsform kann der erste Endlosförderer in einem dreiseitigen Rahmen angeordnet sein, wobei sich die offene Seite, an der das Querrahmenteil fehlt, im Übergangsbereich befindet. Der zweite Endlosförderer kann weiterhin einem vierseitigen Rahmen eingesetzt sein. Gemäß einer weiteren Ausführungsform kann der zweite Endlosförderer ebenfalls in einem dreiseitigen Rahmen angeordnet sein, wobei sich die offene Seite im Übergangsbereich befindet und wobei der erste Endlosförderer einen vierseitigen Rahmen aufweist. Bei diesen beiden Ausführungsformen weist die Transporteinheit im Bereich der Übergangseinheit also nur ein Querrahmenteil - anstelle von zwei Querrahmenteilen beim Stand der Technik - auf.

Weiterhin wird der Durchmesser der Umlenkrolle mindestens eines der beiden Endlosförderer im Übergangsbereich zwischen den beiden Endlosförderern so gewählt, dass die Mehrzahl der Laufrollen der Übergangseinheit gegenüber dem in den Figuren 1 - 6 und 9 gezeichnenden Stand der Technik um mindestens eine Laufrolle reduziert werden kann.

Durch die Reduzierung der zwischen den Endlosförderern angeordneten Querrahmenteile um mindestens ein Querrahmenteil und gegebenenfalls durch Verringerung des Durchmessers mindestens einer Umlenkrolle im Übergangsbereich kann der Abstand zwischen dem ersten und dem zweiten Endlosförderer verringert werden. Dadurch kann die Übergangseinheit verkleinert werden und weniger Laufrollen zur Ausbildung der Übergangseinheit notwendig sind.

Die Anzahl der Laufrollen der Übergangseinheit hängt unter anderem von der verwendeten Stauröllchenkette ab. Werden Endlosförderer mit 1" (ein Zoll) Stauröllchenketten verwendet, umfasst die Übergangseinheit gemäß einer erfindungsgemäßen Ausführungsform drei Laufrollen, während die aus dem Stand der Technik bekannten Übergangseinheiten vier Laufrollen aufweisen. Werden dagegen Endlosförderer mit ½ (halb Zoll) Stauröllchenketten verwendet, umfasst die Übergangseinheit gemäß einer erfindungsgemäßen Ausführungsform nur eine Laufrolle, während die aus dem Stand der Technik bekannten Übergangseinheiten zwei Laufrollen aufweisen.

Die Laufrollen der Übergangseinheit sind auf einer Trägeranordnung angeordnet. Die Trägeranordnung ist beispielsweise direkt an dem zwischen den Endlosförderern angeordneten Rahmenteil des einen vierseitig umrahmten Endlosförderers befestigt. Alternativ bildet die Trägeranordnung einen integralen Bestandteil des zwischen den Endlosförderern angeordneten Rahmenteils des vierseitig umrahmten Endlosförderers. Bei der oben beschriebenen dritten Ausführungsform der Transporteinheit bestehend aus zwei dreiseitig gerahmten Endlosförderern ist zwingend eine separate Befestigung der Trägeranordnung notwendig.

Durch den Einsatz mindestens eines nur dreiseitig gerahmten Endlosförderers können die derzeit eingesetzten zwei Förderelemente (diese werden auch als Antriebs- und Umlenkelemente bezeichnet) in einem Förderelement, der so genannten Transporteinheit, integriert werden. Dadurch entfällt mindestens die Distanz einer Rahmenbreite und somit kann der Spalt zwischen der Umlenkrolle des Antriebselements im Übergangsbereich (Antriebsrad) und der Umlenkrolle des Umlenkelements im Übergangsbereich (Umlenkrad) reduziert werden. Hierbei kann beispielsweise eine Verringerung der Breite um 25% bewirkt werden.

Durch die optional mögliche zusätzliche Verringerung des Durchmessers des Antriebs- und/oder der Umlenkrads kann eine weitere Verringerung der Breite des Übergangbereiches erzielt werden.

Gemäß einer Ausführungsform der Erfindung weisen die in der Übergangseinheit verwendeten Laufrollen einen Durchmesser von maximal 60mm auf, insbesondere weisen sie einen Durchmesser von ca. 50mm auf.

Der Durchmesser der Umlenkrolle des mindestens einen Endlosförderers beträgt maximal 70mm. Insbesondere beträgt der Durchmesser der Umlenkrolle zwischen 63mm und 66mm.

Vorzugsweise findet als Umlenkrolle der Endlosförderer ein Kettenrad mit weniger als 10 Zähnen Verwendung. Insbesondere wird ein Kettenrad mit 8 Zähnen verwendet, wobei der Durchmesser des Kettenrads zwischen 63mm und 66mm beträgt. Die Breite des verwendeten Kettenrades beträgt beispielsweise 38mm, wobei sich die Zähne nur über einen Teil der Breite erstrecken. Insbesondere sind die Zähne mittig über eine Breite von ca. 24mm angeordnet. Die Erfindung ist nicht auf die Reihenanordnung von zwei Endlosförderern beschränkt. Es ist selbstverständlich, dass je nach Transporterfordernis die mehrere Endlosförderer in Reihe geschaltet werden können. Zwischen den erfindungsgemäß ausgestalteten Endlosförderern ist dann die erfindungsgemäß ausgestaltete Übergangseinheit angeordnet. Im Folgenden sollen Ausführungsbeispiele die Erfindung und ihre Vorteile anhand der beigefügten Figuren näher erläutern. Die Größenverhältnisse der einzelnen Elemente zueinander entsprechen nicht immer den realen Größenverhältnissen, da einige Formen vereinfacht und andere Formen zur besseren Veranschaulichung vergrößert im Verhältnis zu anderen Elementen dargestellt sind.
- **Figur 1A**: zeigt eine Ausführungsform einer handelsüblichen Stauröllchenkette gemäß dem Stand der Technik.
- **Figur 1B**: zeigt eine weitere Ausführungsform einer handelsüblichen Stauröllchenkette gemäß dem Stand der Technik.
- **Figur 2**: zeigt eine Aufnahmestruktur für eine Stauröllchenkette eines ersten Endlosförderers gemäß dem Stand der Technik.
- **Figur 3**: zeigt eine Aufnahmestruktur für eine Stauröllchenkette eines zweiten Endlosförderers gemäß dem Stand der Technik.
- **Figur 4**: zeigt schematisch die Anordnung von zwei Endlosförderern zu einem Transportelement gemäß dem Stand der Technik.
- **Figur 5**: zeigt einen Übergang zwischen dem ersten Endlosförderer und dem zweiten Endlosförderer mit einer 1 " Stauröllchenkette gemäß dem Stand der Technik.
- **Figur 6**: zeigt eine Detailansicht des mit der ovalen Umrandung in Fig. 5 gekennzeichneten Bereichs.
- **Figur 7**: zeigt die erfindungsgemäße Transporteinheit aus einem ers- ten Endlosförderer und einem zweiten Endlosförderer.
- **Figur 8**: zeigt eine Detailansicht des in Fig. 7 mit der Ellipse gekenn- zeichneten Bereichs zwischen dem ersten und zweiten End- losförderer.
- **Figur 9**: igt den Übergangsbereich zwischen dem ersten Endlos- förderer und dem zweiten Endlosförderer bei Verwendung einer ½" Stauröllchenkette.
- **Figur 10**: zeigt eine Detailansicht des Übergangs zwischen dem ersten Endlosförderer und dem zweiten Endlosförderer in einer Transporteinheit, die eine ½" Stauröllchenkette verwendet.
- **Figuren 11A bis 11C**: zeigen vergrößerte Darstellungen des Umlenkrades der End- losförderer aus verschiedenen Ansichten.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

Die Figur 1A und 1B zeigen verschiedene Ansichten von Stauröllchenketten 100, wie sie handelsüblich erhältlich sind und vielfach eingesetzt werden. Insbesondere zeigt Figur 1A eine 1" (ein Zoll) Stauröllchenkette 100 und Figur 1B eine ½" (halb Zoll) Stauröllchenkette 100. Die dargestellten Stauröllchenketten 100 werden vorrangig in Bereichen eingesetzt, in denen ein Stauverhalten des Fördergutes erforderlich ist. Die dargestellte Stauröllchenketten 100 weisen Kettenglieder 102 mit Röllchen 104 auf. Wenn sich das zu fördernde Gut auf der Stauröllchenkette 100 staut, kann die Transportbewegung der Stauröllchenkette 100 aufrecht erhalten werden, da die Röllchen 104 dem zu transportierenden Gut keinen nennenswerten Widerstand entgegensetzen. Das zu transportierenden Gut wir bei Stau nicht beschädigt.

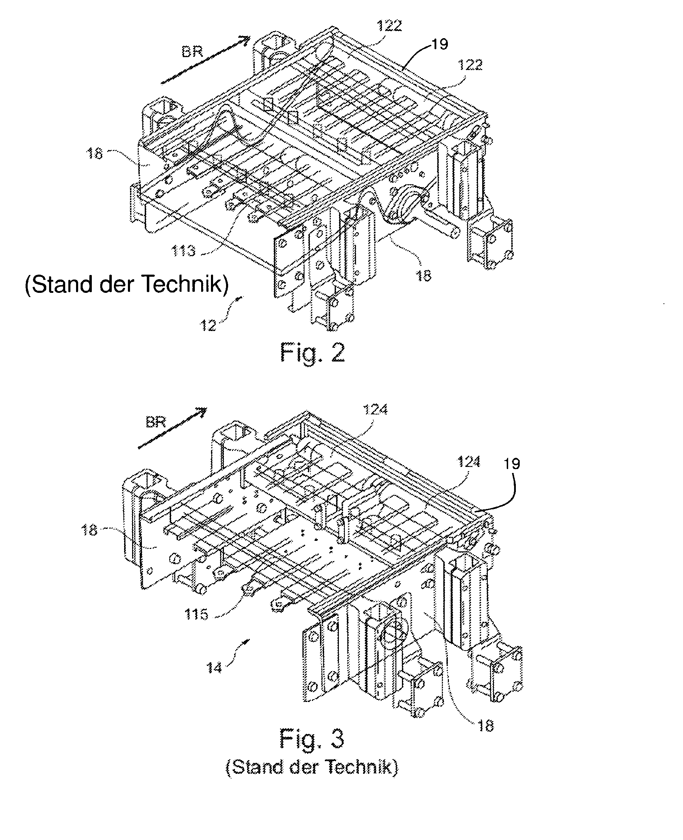

Figur 2 zeigt einen ersten Endlosförderer 12 und Figur 3 zeigt einen zweiten Endlosförderer 14 gemäß dem Stand der Technik. Bei dem ersten Endlosförderer 12 und dem zweiten Endlosförderer 14 handelt es sich jeweils um endlos umlaufende Stauröllchenketten, wobei der jeweilige Fördertisch 113, 115 der Endlosförderer 12, 14 von (hier nicht dargestellten) Stauröllchenketten in Bewegungsrichtung BR umlaufen wird. Die Fördertische 113, 115 weisen jeweils einen um die Stauröllchenketten herum angebrachten vierseitigen Rahmen auf, der aus einem zwei seitlichen Rahmenelementen 18 und zwei Querrahmenelementen 19 ausgebaut ist.

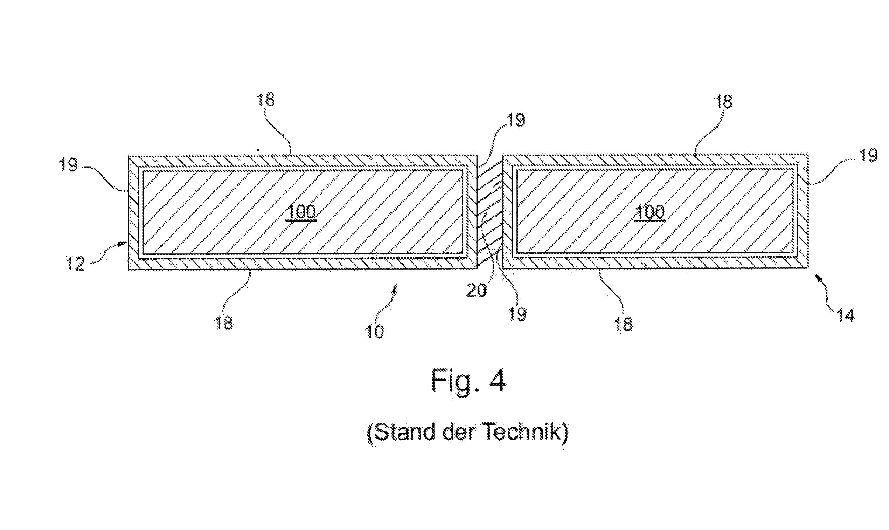

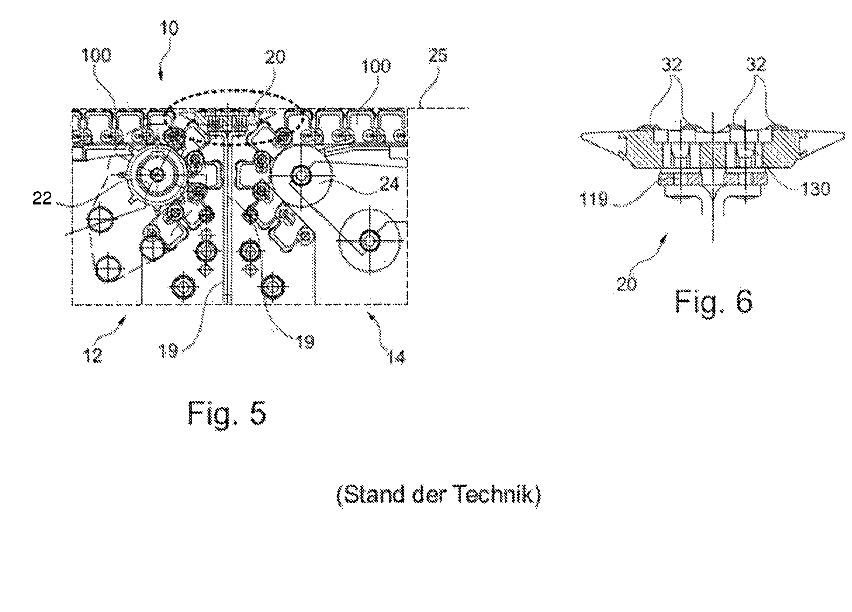

Wie in Figur 4 dargestellt, sind der erste Endlosförderer 12 und der zweite Endlosförderer 14 zu einer Transporteinheit 10 zusammengefasst. Hierzu ist eine Übergangseinheit 20 vorgesehen. Die herkömmlich bekannte Art der Anordnung der Übergangseinheit 20 ist zwischen dem ersten Endlosförderer 12 und dem zweiten Endlosförderer 14 in Figur 5 dargestellt. Figur 5 zeigt eine seitliche Ansicht der Transporteinheit 10 im Bereich der Übergangseinheit 20. Die Transporteinheit 10 besteht aus dem ersten Endlosförderer 12 mit einer Antriebsrolle 22 und einem zweiten Endlosförderer 14 mit einer Umlenkrolle 24, über die jeweils die Stauröllchenkette 100 geführt wird, wobei diese jeweils in einem vierseitigen Rahmen gehaltert sind. Die Rahmen des ersten Endlosförderers 12 und des zweiten Endlosförderers14 sind mechanisch miteinander verbunden. Damit ein problemloser Übergang der transportierten Artikel von der Stauröllchenkette 100 des ersten Endlosförderers 12 auf die Stauröllchenkette 100 des zweiten Endlosförderers 14 möglich ist, ist zwischen diesen beiden Endlosförderern 12, 14 eine geeignete Übergangseinheit 20 ausgebildet. In der hier dargestellten Ausführungsform trägt die Übergangseinheit 20 vier Laufrollen 32 (siehe Fig. 6), die auf einer Trägeranordnung 119 angeordnet sind. Die Übergangseinheit 20 ist in Figur 6 vergrößert gezeigt und stellt die vier Laufrollen 32 dar. Die vier Laufrollen 32 ist mittels Schrauben 130 auf der Trägeranordnung 119 befestigt. Die vier Laufrollen 32 erleichtern und ermöglichen den Übergang der zu transportierenden Artikel von der Stauröllchenkette 100 des ersten Endlosförderers 12 auf die Stauröllchenkette 100 des zweiten Endlosförderers 14. Die Trägeranordnung 119 kann hierbei als separates Bauteil ausgestaltet sein, dass beispielsweise an dem Querrahmenteil 19 befestigt ist. Alternativ ist die Trägeranordnung 119 als integraler Bestandteil der beiden Querrahmenteile 19, ausgebildet.

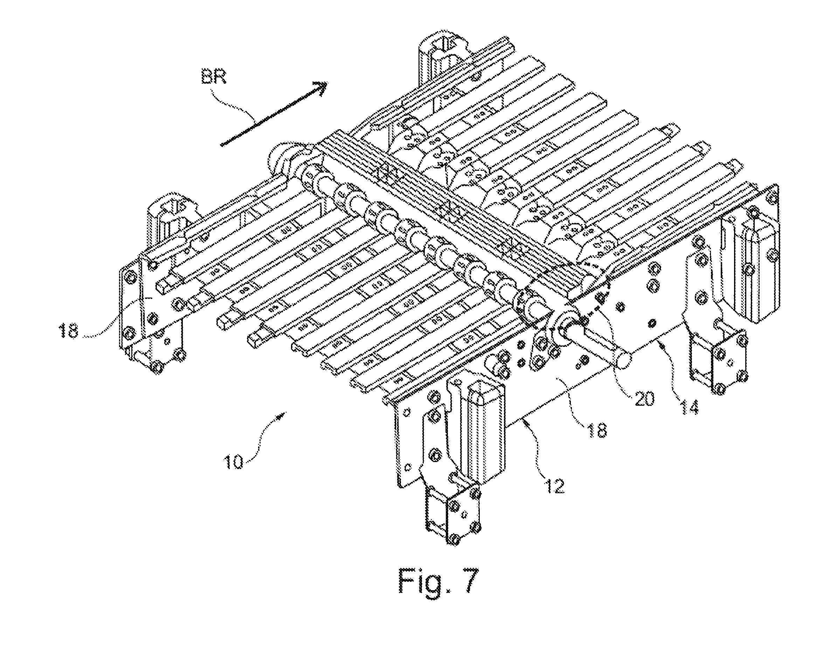

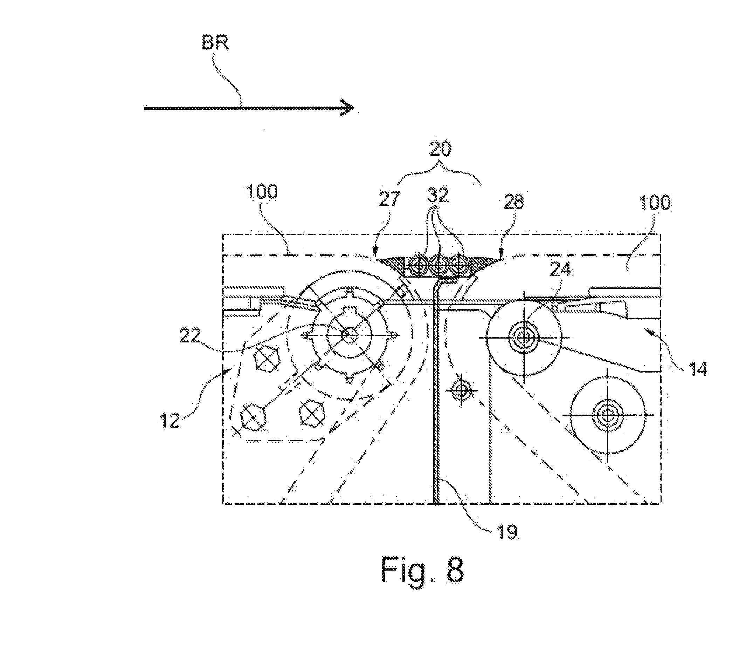

Figur 7 zeigt eine erfindungsgemäße Transporteinheit 10 bestehend aus dem ersten Endlosförderer 12 und dem zweiten Endlosförderer 14. Durch den Einsatz von seitlichen Rahmenelementen 18, werden der erste Endlosförderer 12 und der zweite Endlosförderer 14 gemeinsam durch diese seitlichen Rahmenelemente 18 getragen. Durch die gemeinsamen, seitlichen Rahmenteile 18 entfällt ein Querrahmenteil 19 (siehe Fig. 8) quer zur und Bewegungsrichtung BR der Transporteinheit 10. Durch diese Anordnung entfällt ein Querrahmenteil 19 zwischen dem ersten Endlosförderer 12 und dem zweiten Endlosförderer 14. Im gezeigten Ausführungsbeispiel entfällt das Querrahmenteil 19 des ersten Endlosförderers 12, so dass im Übergangsbereich nur das Querrahmenteil 19 des zweiten Endlosförderers 14 vorgesehen ist. Dadurch können der erste Endlosförderer 12 und der zweite Endlosförderer 14 näher zusammengebracht werden, so dass der Abstand zwischen Antriebsrad 22 und Umlenkrad 24 verkleinert ist.

In **Figur 8** ist eine vergrößerte Darstellung des in Fig. 7 mit der Ellipse dargestellten Bereichs. Im Bereich zwischen dem ersten Endlosförderer 12 und dem zweiten Endlosförderer 14 ist die vom Querrahmenteil 19 getragene Übergangseinheit 20 angeordnet. Durch die Verringerung des Abstandes zwischen dem ersten Endlosförderer 12 und dem zweiten Endlosförderer 14 kann die Länge der Übergangseinheit 20 um mindestens 25% reduziert werden. Somit ist es möglich die Übergangseinheit 20 mit nur drei Laufrollen 32 zu konzipieren. Somit kann die Anzahl der Laufrollen 32 gegenüber dem Stand der Technik um mindestens eine Laufrolle 32 reduziert werden. Es ist selbstverständlich, dass bei dem ersten Endlosförderer 12 und dem zweiten Endlosförderer 14 jeweils auf die gegenüberliegenden Querrahmenteile 19 verzichtet werden kann. Die Übergangseinheit 20 ist dann auf einem separaten Träger (nicht dargestellt) angebracht.

Weiterhin sind die Durchmesser von Antriebsrad 22 und/oder Umlenkrad 24 gegenüber dem Stand der Technik reduziert, was weiterhin eine Verkleinerung des durch die Übergangseinheit 20 zu überbrückenden Abstands bewirkt.

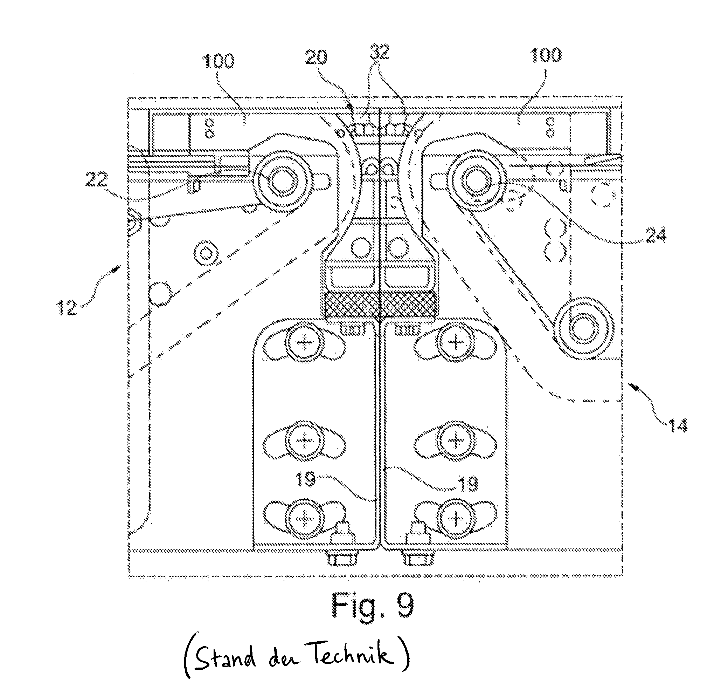

**Figur 9** zeigt den Bereich des Übergangs zwischen dem ersten Endlosförderer 12 und dem zweiten Endlosförderer 14 mit einer ½" Stauröllchenkette 100 gemäß dem Stand der Technik. Damit ein problemloser Übergang der transportierten Artikel von der ½" Stauröllchenkette 100 des ersten Endlosförderers 12 auf die ½" Stauröllchenkette 100 des zweiten Endlosförderers 14 möglich ist, ist zwischen den beiden Endlosförderern 12, 14 eine geeignete Übergangseinheit 20 ausgebildet. Insbesondere umfasst die Übergangseinheit 20 zwei Laufrollen 32.

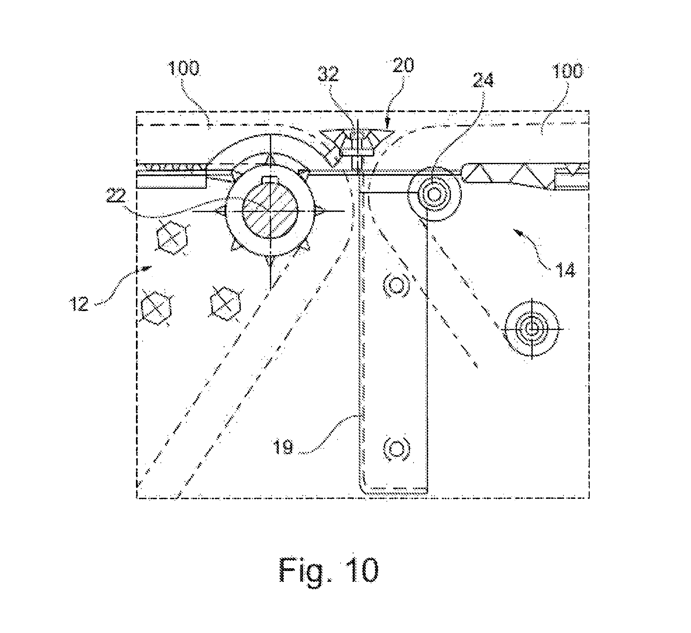

**Figur 10** zeigt eine detaillierte Ansicht der Übergangseinheit 20 zwischen dem erste Endlosförderer 12 und der zweite Endlosförderer 14 gemäß der Erfindung. Hier sind analog zu Figur 9½" Stauröllchenketten 100 verwendet. Durch die Verringerung des Abstandes zwischen dem ersten Endlosförderer 12 und dem zweiten Endlosförderer 14 kann auf ein Querrahmenteil 19 verzichtet werden. In der hier dargestellten Ausführungsform ist die Übergangseinheit 20 am Querrahmenteil 19 montiert. Die Breite der Übergangseinheit 20 ist um mindestens 25% reduziert. Bei Einsatz von ½" Stauröllchenketten 100, 100 kann hier ein sehr kleiner Übergang mit nur einer Rolle 32 konzipiert werden. Somit kann die Anzahl der Übergangsrollen 32 gegenüber dem Stand der Technik um mindestens eine Rolle 32 reduziert werden.

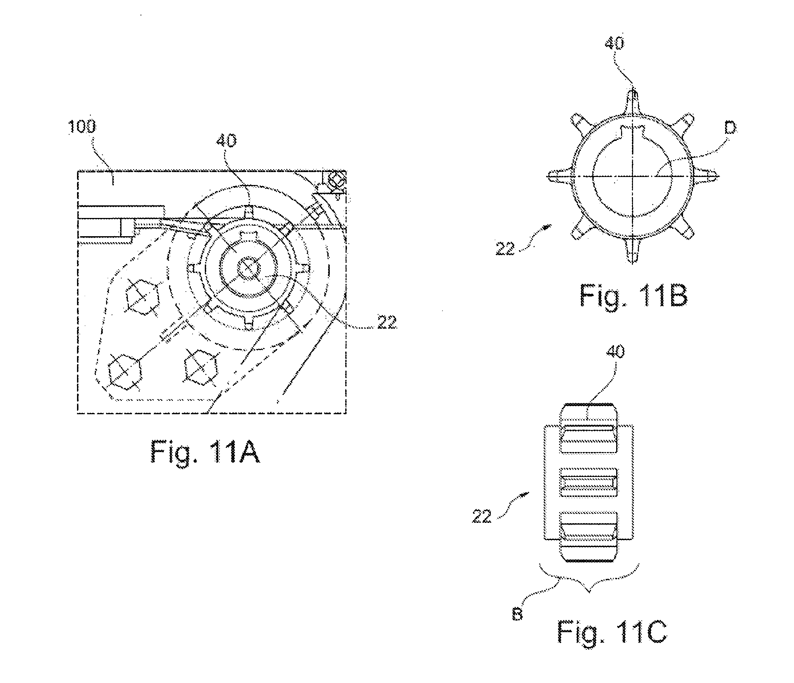

**Figuren 11A bis 11C** zeigen detailliert die Antriebsrolle 22 der Endlosförderer 12, 14. In der hier gezeigten Ausführungsform ist die Antriebsrolle 22 als Kettenrad ausgebildet. Das Kettenrad weist vorzugsweise weniger als zehn Zähne 40 auf. Gemäß der gezeigten Ausführungsform weist das Kettenrad 22 acht Zähne 40 auf und hat einen Durchmesser zwischen 60mm bis 70mm, insbesondere zwischen 63mm und 67mm. **Figur 11A** stellt die Antriebsrolle 22 bzw. das Kettenrad im eingebauten Zustand im Zusammenhang mit einer Stauröllchenkette 100 dar, während Figuren 11B und 11C das Kettenrad 22 detailliert in unterschiedlichen Ansichten zeigen. Der Durchmesser D des Kettenrads 22 beträgt vorzugsweise zwischen 63mm und 66mm. Die Breite B des verwendeten Kettenrades 22 beträgt beispielsweise 38mm, wobei sich die Zähne 40 nur über einen Teil der Breite B erstrecken (vgl. Figur 11C). Insbesondere sind die Zähne mittig in Bezug auf die Breite B von ca. 24mm angeordnet.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Transporteinheit (10) zum Transport und/oder zum Aufstauen von Artikeln umfassend mindestens zwei aneinandergrenzende, als Stauröllchenkette (100) ausgebildete, über jeweils zwei Umlenkrollen (22, 24) geführte Endlosförderer (12, 14), wobei zwischen den Endlosförderern (12, 14) eine Übergangseinheit (20) angeordnet ist, so dass die Stauröllchenketten (100) der beiden Endlosförderer (12, 14) und die Übergangseinheit (20) einen im Wesentlichen ebenen Transportweg (25) bilden,
zwei wobei seitliche Rahmenteile (18) den ersten und zweiten Endlosförderer (12, 14) haltern, dass ein einziges Querrahmenteil (19) des ersten oder des zweiten Endlosförderers (12, 14) den ersten Endlosförderer (12) und den zweiten Endlosförderer (14) miteinander verbindet, wobei auf dem Querrahmenteil (19) die Übergangseinheit (20) angeordnet ist, **dadurch gekennzeichnet, dass** die Übergangseinheit (20) eine Mehrzahl von Laufrollen (32) umfasst.

2. Transporteinheit (10) nach Anspruch 1, wobei die Übergangseinheit (20) drei Laufrollen (32) umfasst.

3. Transporteinheit (10) nach Anspruch 1 oder 2, wobei die Übergangseinheit (20) auf einer separaten Trägeranordnung (29) angeordnet ist.

4. Transporteinheit (10) nach einem der Ansprüche 1 bis 3, wobei die Laufrollen (32) der Übergangseinheit (20) einen Durchmesser von maximal 60mm aufweisen.

5. Transporteinheit (10) nach einem der Ansprüche 1 bis 3, wobei die Laufrollen (32) der Übergangseinheit (20) einen Durchmesser von 50mm aufweisen.

6. Transporteinheit (10) nach einem der Ansprüche 1 bis 5, wobei der Durchmesser der Umlenkrolle (22, 24) des mindestens einen Endlosförderers (12, 14) maximal 70mm beträgt.

7. Transporteinheit (10) nach Anspruch 6, wobei der Durchmesser der Umlenkrolle (22, 24) des mindestens einen Endlosförderers (12, 14) zwischen 63mm bis 66mm beträgt.

## Claims

1. A transport unit (10) for transport and/or for accumulation of articles, comprising at least two endless conveyors (12, 14) adjacent to one another, designed as an accumulating roller chain (100), each operating via two deflection rollers (22, 24), wherein a transition unit (20) is arranged between the endless conveyors (12, 14), so that the accumulating roller chains (100) of both endless conveyors (12, 14) and the transition unit (20) form an essentially even transport path (25),
wherein two frame parts (18) on the side hold the first and second endless conveyors (12, 14), so that a single transverse frame part (19) of the first or the second endless conveyor (12, 14) connects the first endless conveyor (12) and the second endless conveyor (14) with each other, wherein the transition unit (20) is arranged on the transverse frame part (19), **characterized in that** the transition unit (20) comprises a plurality of track rollers (32).

2. The transport unit (10) according to Claim 1, wherein the transition unit (20) comprises three track rollers (32).

3. The transport unit (10) according to Claim 1 or 2, wherein the transition unit (20) is arranged on a separate support assembly (29).

4. The transport unit (10) according to any one of the Claims 1 to 3, wherein the track rollers (32) of the transition unit (20) have a maximum diameter of 60 mm.

5. The transport unit (10) according to any one of the Claims 1 to 3, wherein the track rollers (32) of the transition unit (20) have a diameter of 50 mm.

6. The transport unit (10) according to any one of the Claims 1 to 5, wherein the diameter of the deflection roller (22, 24) of the at least one endless conveyor (12, 14) is a maximum of 70 mm.

7. The transport unit (10) according to Claim 6, wherein the diameter of the deflection roller (22, 24) of the at least one endless conveyor (12, 14) is between 63 mm and 66 mm.

## Revendications

1. Unité de transport (10) pour le transport et/ou pour l'accumulation d'articles, comprenant au moins deux transporteurs sans fin (12, 14) adjacents, formés comme chaînes à rouleaux d'accumulation (100), guidés via respectivement deux poulies de renvoi (22, 24), étant donné qu'une unité de transition (20) est disposée entre les transporteurs sans fin (12, 14), de manière à ce que les chaînes à rouleaux d'accumulation (100) des deux transporteurs sans fin (12, 14) et l'unité de transition (20) forment un trajet de transport (25) essentiellement plan,
étant donné que deux parties de châssis latérales (18) retiennent les premier et deuxième transporteurs sans fin (12, 14), qu'une seule pièce de châssis transversal (19) du premier ou du deuxième transporteur sans fin (12, 14) raccorde le premier transporteur sans fin (12) avec le deuxième transporteur sans fin (14), étant donné que l'unité de transition (20) est disposée sur la pièce de châssis transversal (19),
**caractérisée en ce que** l'unité de transition (20) comprend une pluralité de galets de roulement (32).

2. Unité de transport (10) selon la revendication 1, étant donné que l'unité de transition (20) comprend trois galets de roulement (32).

3. Unité de transport (10) selon la revendication 1 ou 2, étant donné que l'unité de transition (20) est disposée sur un ensemble de support (29) séparé.

4. Unité de transport (10) selon l'une quelconque des revendications 1 à 3, étant donné que les galets de roulement (32) de l'unité de transition (20) présentent un diamètre maximal de 60 mm.

5. Unité de transport (10) selon l'une quelconque des revendications 1 à 3, étant donné que les galets de roulement (32) de l'unité de transition (20) présentent un diamètre de 50 mm.

6. Unité de transport (10) selon l'une quelconque des revendications 1 à 5, étant donné que le diamètre de la poulie de renvoi (22, 24) du au moins un transporteur sans fin (12, 14) est au maximum égal à 70 mm.

7. Unité de transport (10) selon la revendication 6, étant donné que le diamètre de la poulie de renvoi (22, 24) du au moins un transporteur sans fin (12, 14) est situé entre 63 mm et 66 mm.
